# EUROPEAN PATENT SPECIFICATION

(11) **EP 4 475 312 B1**
(45) Date of publication and mention of the grant of the patent: **03.06.2026**
(21) Application number: 23746947.3
(22) Date of filing: 24.01.2023
(51) Int. Cl.: H01M 50/342, H01G 9/12, H01M 50/107, H01G 11/20, H01G 11/78, H01G 11/80, F16K 17/40, F16K 24/04

(54) **POWER STORAGE DEVICE**
ENERGIESPEICHERVORRICHTUNG
DISPOSITIF DE STOCKAGE D'ÉNERGIE

(30) Priority: 31.01.2022 JP 2022012721
(43) Date of publication of application: 11.12.2024
(73) Proprietor: Panasonic Holdings Corporation, Osaka, 571-8501 (JP); Panasonic Energy Co., Ltd., Osaka 570-8511 (JP)
(72) Inventor: HASHIMOTO, Junya, Osaka 571-0057 (JP); OKUTANI, Oose, Osaka 571-0057 (JP); MIHARA, Satoru, Osaka 571-0057 (JP)
(74) Representative: Eisenführ Speiser
(86) International application number: PCT/JP2023/002129
(87) International publication number: WO 2023/145736

(56) References cited:
- EP-A1- 4 421 952
- WO-A1-2010/100731
- CN-A- 112 382 826
- JP-A- 2015 149 161
- JP-A- 2019 153 388
- JP-A- 2021 136 194

## Description

### TECHNICAL FIELD

The present disclosure relates to a power storage device that includes an exhaust valve.

### BACKGROUND ART

EP 4 421 952 A1 provides a cylindrical battery with the aim of improved safety and also suppressing deformation of a bottom part. According to one aspect of the disclosure of EP 4 421 952 A1, a cylindrical battery comprises an electrode body, an electrolyte, an outer can that is a bottomed cylinder that houses the electrode body and the electrolyte, and a sealing body that closes an opening part of the outer can. A bottom part of the outer can has a first groove that forms a polygon and a plurality of second grooves that respectively extend from the plurality of vertices of the polygon toward the outside. EP 4 421 952 A1 was published after the priority date of the present application and is therefore only prior art under Art. 54(3) EPC and not relevant for the assessment of inventiveness.

In recent years, power storage devices have been used in many fields as power sources for electronic equipment. In particular, power storage devices are attracting attention as power sources for driving moving bodies, such as electric vehicles, electric bicycles, airplanes, and ships. There is a strong demand for increased energy density of the power storage devices. As the energy density of the power storage devices increases, so does the demand for increased safety of the power storage devices. When a power storage device enters an abnormal state, gas may accumulate in the power storage device and the internal pressure of the power storage device may increase. Patent Literature (PTL) 1 discloses a power storage device that includes an exhaust valve that exhausts gas accumulated in the power storage device when the internal pressure of the power storage device exceeds a predetermined value.

### Citation List

### Patent Literature

[PTL 1] Japanese Unexamined Patent Application Publication No. 2006-338979

### SUMMARY OF THE INVENTION

By using the exhaust valve described in PTL 1, the gas in the power storage device is exhausted and the power storage device in an abnormal state can be safely stopped. However, there is room for further study to increase the reliability of the exhaust valve.

In view of the above, an object of the present disclosure is to provide a more reliable power storage device.

A power storage device according to one aspect of the present disclosure is defined in claim 1.

The power storage device according to the present disclosure further increases the reliability of the power storage device.

The invention is disclosed in the appended claims.

### BRIEF DESCRIPTION OF THE DRAWINGS

FIG. 1 is a front cross-sectional view of a power storage device according to an embodiment of the present disclosure.
FIG. 2 is a bottom view of an outer covering can of the power storage device according to the embodiment of the present disclosure.
FIG. 3 is a bottom view illustrating another example of an exhaust valve used in the power storage device according to the embodiment of the present disclosure.
FIG. 4 is a bottom view illustrating another example of the exhaust valve used in the power storage device according to the embodiment of the present disclosure.

### DESCRIPTION OF EMBODIMENT

Hereinafter, an example of an embodiment of a cylindrical battery according to the present disclosure will be described in detail with reference to the drawings. In the following description, the specific shapes, materials, numerical values, directions, and the like are given by way of example to facilitate understanding of the present disclosure, and may be appropriately changed according to the specifications of a power storage device. Moreover, if the following description includes a plurality of embodiments or variations, it is originally intended to use appropriate combinations of features of the embodiments or the variations. Terms such as "first", "second", etc. used in the following description do not necessarily limit the order or arrangement according to the numbers among the structural elements.

A power storage device according to one aspect of the present disclosure is defined in claim 1.

The exhaust valve of the power storage device according to the present disclosure includes the first valve part that is opened at a relatively low pressure by being enclosed by a loop-shaped groove, and the second valve part that is not partially surrounded by a groove and operates at a pressure higher than the first valve part. This exhaust valve allows only the first valve part to open when the amount of gas in the power storage device in the abnormal state is relatively small and the internal pressure of the power storage device is higher, but not significantly higher, than that in the normal state. (Hereinafter, this valve opening is also referred to as a "first valve opening"). Then, when the amount of gas in the power storage device in the abnormal state increases rapidly and the internal pressure of the power storage device increases significantly, not only the first valve part but also the second valve part open. (Hereinafter, this valve opening is also referred to as a "second valve opening). By also opening the second valve part, the area of the exhaust port formed in the second valve opening is larger than that in the first valve opening. The increased area of the exhaust port allows a larger amount of gas to be released in the second valve opening than in the first valve opening. Thus, the first valve part and the second valve part allow the valve to open with an exhaust port area suitable to the pressure of the power storage device in an abnormal state and to release gas efficiently. This further prevents the power storage device from rupturing due to the gas accumulated inside the power storage device, leading to a higher reliability as a power storage device.

### <Operating Mechanism of Exhaust Valve according to the Present Disclosure>

An example of the behavior of an exhaust valve according to the present disclosure when the exhaust valve opens will be described.

In the exhaust valve according to the present disclosure, a first valve opening is caused by a first valve part, and after the first valve opening, a second valve opening is caused by a second valve part.

In the first valve opening, the bottom part first expands and is deformed so that the central part of the bottom part protrudes the most. At that time, in the exhaust valve, stress is concentrated on the intersection points of the first valve part. Rupturing then occurs from a predetermined intersection point among a plurality of intersection points surrounding the first valve part (hereinafter, this intersection point is also referred to as a "rupturing intersection point"). The two first grooves that intersect with each other at the rupturing intersection point rupture from the one ends at the rupturing intersection point to the other ends. The rupturing then proceeds sequentially from the first groove closer to the rupturing intersection point to the first groove farther from the rupturing intersection point. Finally, it may be that all first groove parts ruptures and the first valve part is separated from the exhaust valve.

In the second valve opening, the rupturing occurs from the first end to the second end in the second groove of the second valve part. The second valve part that has ruptured to the second end is cantilevered, while being connected to the bottom part of the outer covering can at the second end, as the second end is positioned away from the first groove. After the second valve part is turned into this state, the connection part of the second valve part at the second end that is connected to the bottom part may also be ruptured by the force of the gas exhausted from the power storage device, and the second valve part may be separated from the bottom part.

### <Detailed Description of Configuration of Exhaust Valve according to the Present Disclosure>

A configuration of the exhaust valve according to the present disclosure will be described.

Each of the plurality of first grooves may be a curved line that is curved and projects toward outside the first valve part, when viewed from the direction of the thickness of the bottom part. When the center of the bottom part of the outer covering can is positioned within the first valve part, the first grooves that are made of curved lines prevent the force applied to each first groove when the bottom part expands from being unevenly distributed compared to a first valve part where first grooves are made of straight lines. The shape of each first groove is a curved line that projects toward outside the first valve part when viewed from the direction of the thickness of the bottom part. This makes it easy to increase the angle formed by two adjacent first grooves and an intersection point at which the two adjacent first grooves intersect with each other, compared to a first valve part which includes the same number of intersection points and includes only first grooves that are made of straight lines. Therefore, in the first valve part, stronger mechanical stress from the gas can be applied to the first grooves near the intersection point. In the first valve part, at the intersection points other than the intersection point at which the opening of the first valve part starts, the resistance to the rupturing at the intersection points can be reduced when the rupturing proceeds passing each intersection point, due to the fact that the angle at each intersection point is easily increased as described above.

It may be that at least one second groove is a curved line that extends and projects away from the first valve part. Such a curved shape facilitates the rupturing of the second groove. Moreover, among the first end and the second end of the second groove, the second end is positioned away from the first groove. This configuration allows the starting point of the rupturing when the second groove ruptures to be the first end side that is connected to the first groove. When the exhaust valve includes a plurality of second grooves and a plurality of second valve parts, the second end of each second groove is preferably positioned away from the other second grooves. Moreover, the second groove that is curved may partially include a part of the circumference (arc) centered on the center of bottom part 15a. At this time, the non-arc part in the second groove may be a curved line positioned inside the circumference. Such a second groove can be positioned in circular bottom part 15a based on the arc part. This facilitates positioning of exhaust valve 29 in bottom part 15a.

Moreover, in the exhaust value used in the power storage device according to the present disclosure as defined in claim 1, when a straight line connecting the first intersection point and the second intersection is defined as a straight line α, and a point farthest from the straight line α in the at least one second groove is defined as a point P, the point P is positioned closer to the first end than to the second end, and the second end is positioned closer to the straight line α than to the point P. Here, point P being closer to the first end means that the distance between point P and the first end is smaller than the distance between point P and the second end in the direction in which straight line α extends. The second end being closer to straight
line α means that the distance between the second end and straight line α is less than the distance between the second end and point P in the direction perpendicular to the straight line α. This configuration makes it easy for the region of the second valve part with a large pressure receiving area to become farther away from the second end. Compared to a second valve part with the region close to the second end, the region being farther away from the second end increases the mechanical stress applied, when gas pressure is applied to the second valve part, to the second groove and the second end side of the second valve part with the region as the point of effort and the connection part on the second end side as the fulcrum. This facilitates opening of the second valve part and rupturing of the second valve part from the bottom part. In addition, point P is positioned closer to the first intersection point in the direction in which straight line α extends than point Q which is the point in the first groove farthest from straight line α. This makes it easy to apply gas force to the second groove and the second end connection part in the second valve part.

In the exhaust valve of the power storage device according to the present disclosure, it may be that the second end is positioned closer to the second intersection point than to the first intersection point. This configuration makes it easy to increase the pressure-receiving area of the second valve part compared to a second valve part whose second end is positioned closer to the first intersection point, and also makes it easy to increase the distance between the region including point P farthest from straight line α in the second groove (region with a large pressure-receiving area) and the second end. Therefore, it is easy to apply mechanical stress to the second groove and the connection part on the second end side, with the region of the second valve part with a large pressure receiving area as the point of effort and the connection part on the second end side as the fulcrum. This facilitates rupturing of the second groove, and facilitates rupturing of the second valve part from the bottom part.

In the exhaust value used in the power storage device according to the present disclosure, it may be that among two first grooves that intersect with each other at the first intersection point, one of the two first grooves and the second groove form a continuous curved groove. This configuration reduces the time lag between the start of the first valve opening and the start of the second valve opening when the second valve opening starts after the first valve opening, compared to an exhaust valve in which the direction of extension is significantly different between the first and second grooves. The reduced time lag allows for more flexibility in increasing the area of the exhaust port of the exhaust valve.

In the exhaust value used in the power storage device according to the present disclosure, it may be that the plurality of first grooves are identical to one another in shape and length, the at least one second groove includes a plurality of second grooves, and the plurality of second grooves are identical to one another in shape and length. This exhaust valve is capable of preventing variations in the force applied to the first grooves or to the second grooves when the first and second valve parts are pressurized by the gas in the power storage device. In particular, when the first valve part and the second valve part are rotationally symmetrical when viewed in plan view, it is possible to prevent the force from being unevenly applied to the first grooves and the second grooves, compared to an exhaust valve that is not rotationally symmetrical.

The number of intersection points in the first valve part may be at most four, or may be three or two. In particular, a smaller number of intersection points in the first valve part leads to a smaller number of first grooves that have not ruptured when the rupturing intersection point and the two first grooves that intersect with each other at the rupturing intersection point rupture. This facilitates the rupturing of the first valve part.

The above explanation does not necessarily mean that the region of the exhaust valve according to the present disclosure including point P is the part with the largest pressure receiving area (the largest distance between the first and second grooves) in the second valve part. The pressure receiving area of the region positioned in the vicinity of the region including point P may be the largest.

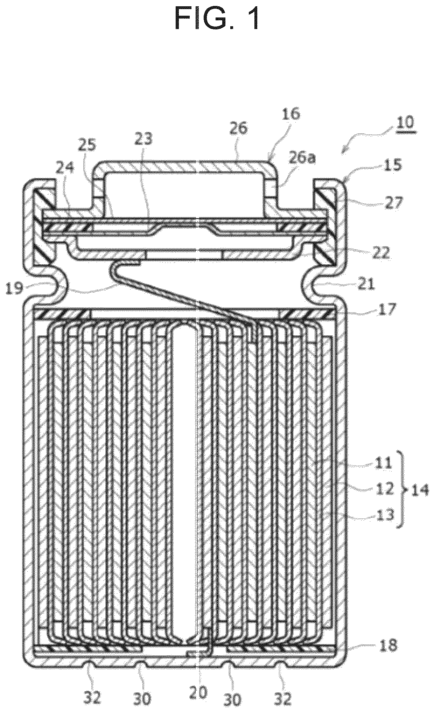

FIG. 1 illustrates a front cross-sectional view of battery 10 that is an example of the power storage device according to the present embodiment. Battery 10 includes electrode body 14, electrolyte (not illustrated), bottomed cylindrical outer covering can 15 that houses electrode body 14 and the electrolyte, and sealing body 16 that covers the opening of outer covering can 15. In the following, the direction along the axis of outer covering can 15 is defined as the "longitudinal direction", with the sealing body 16 side defined as the "top" and the bottom part side of outer covering can 15 defined as the "bottom". Moreover, the direction perpendicular to the axis of outer covering can 15 is defined as the "transverse direction", and the radial center side of outer covering can 15 is defined as the "inside" and the radial outside is defined as the "outside".

The power storage device according to the present embodiment will be described using a lithium-ion rechargeable battery among batteries as an example. However, the power storage device according to the present disclosure may be a rechargeable battery, such as a lithium-ion rechargeable battery or a nickel-metal hydride battery, or a capacitor, such as an electric double layer capacitor or a lithium-ion capacitor.

Electrode body 14 includes a wound structure in which positive electrode 11 and negative electrode 12 are wound via separator 13. Electrode body 14 is not limited to the wound type, but may be a stacked type.

Positive electrode 11 includes, for example, a belt-shaped positive electrode current collector and positive electrode mixture layers disposed on both sides of the positive electrode current collector. For example, a foil of a metal such as aluminum, a film with the metal disposed on the surface layer, or the like is used as a positive electrode current collector. The positive electrode mixture layer contains at least a positive electrode active material, and may contain a conductive agent, a binder, and the like. Examples of the positive electrode active material include lithium-containing transition metal oxides containing transition metal elements such as Ni. Positive electrode 11 can be produced by coating both sides of the positive electrode current collector with a positive electrode mixture slurry, in which the positive electrode active material and other materials are dispersed in a solvent, followed by drying and rolling the positive electrode mixture layer.

Negative electrode 12 includes, for example, a belt-shaped negative electrode current collector and negative electrode mixture layers disposed on both sides of the negative electrode current collector. For example, a foil of a metal such as copper, a film with the metal disposed on the surface layer, or the like is used for the negative electrode current collector. The negative electrode mixture layer contains at least a negative electrode active material, and may contain a binder, and the like. Examples of the negative electrode active material include carbon materials such as natural graphite and artificial graphite, and metallic compounds such as silicon-based compounds. Negative electrode 12 can be produced by coating both sides of the negative electrode current collector with a negative electrode mixture slurry, in which the negative electrode active material and other materials are dispersed in a solvent, followed by drying and rolling the negative electrode mixture layer.

For separator 13, for example, a porous sheet having ion permeability and insulation properties can be used. Specific examples of the porous sheet include a microporous thin film, and woven and non-woven fabrics. Olefin resin, such as polyethylene and polypropylene, can be used as the material of separator 13.

Upper insulating plate 17 is disposed above electrode body 14 and lower insulating plate 18 is disposed below electrode body 14. Positive electrode lead 19 extends upward through the through hole of upper insulating plate 17, and is welded to the lower surface of filter 22 that is the bottom plate of sealing body 16. In battery 10, cap 26, which is the top plate of sealing body 16 electrically connected to filter 22, serves as a positive electrode terminal. On the other hand, negative electrode lead 20 extends through the through hole of lower insulating plate 18 toward bottom part 15a of outer covering can 15, and is welded to the inner surface of bottom part 15a to form a joint part. In battery 10, outer covering can 15 serves as a negative electrode terminal.

It may be that at least one electrode plate of positive electrode 11 and negative electrode 12 may include an uncoated part where a mixture layer is not disposed at one widthwise end of the belt-shaped electrode plate. It may be that the electrode plates are wound such that the uncoated part protrudes from the paired electrode plate and separator in the winding axis direction of electrode body 14, and the protruding uncoated part forms one end face of electrode body 14 in the winding axis direction. The end face may be joined to a conductive current collector plate and current may be collected from the above electrode plate to the current collector plate.

Outer covering can 15 is a bottomed cylindrical metal container. The thickness of outer covering can 15 is, for example, 0.2 mm to 1.0 mm. Outer covering can 15 includes a bottom part and a sidewall that stands around the periphery of the bottom part. Bottom part 15a of outer covering can 15 includes first grooves 30 and second grooves 32. As described later, first grooves 30 and second grooves 32 rupture when the internal pressure of battery 10 increases during an abnormal state, and gas is exhausted through the ruptured parts. The lateral wall of outer covering can 15 includes groove 21. Groove 21 supports sealing body 16 from below. It is preferable that groove 21 is formed in an annular shape along the circumferential direction of outer covering can 15. Examples of the metal of outer covering can 15 include copper, aluminum, iron, nickel, stainless steel, and alloys of these metals. Nickel-plated inner surfaces of iron cans or copper cans are preferable especially when outer covering can 15 serves as a negative electrode terminal. However, the material of outer covering can 15 is not limited to such materials.

The opening at the top of outer covering can 15 is covered by sealing body 16 via gasket 27, ensuring a tight seal inside battery 10. Sealing body 16 includes filter 22, lower valve body 23, insulating member 24, upper valve body 25, and cap 26, which are stacked in order from electrode body 14 side. Each component of sealing body 16 has a disc or ring shape, for example, and the components excluding insulating member 24 are electrically connected to one another. The central parts of lower valve body 23 and upper valve body 25 are connected to each other, and insulating member 24 is interposed between the peripheral parts of lower valve body 23 and upper valve body 25. When the internal pressure of battery 10 increases during an abnormal state, for example, lower valve body 23 ruptures. This causes upper valve body 25 to expand toward cap 26 and away from lower valve body 23, thereby interrupting the electrical connection between lower valve body 23 and upper valve body 25. When the internal pressure increases further, upper valve body 25 ruptures, and gas is exhausted through opening 26a of cap 26.

Outer covering can 15 houses the electrolyte in addition to electrode body 14. Aqueous and non-aqueous electrolytes can be used as electrolytes, for example, but non-aqueous electrolytes are preferrable. Examples of non-aqueous solvents (organic solvents) for the non-aqueous electrolytes include carbonates, lactones, ethers, ketones, and esters. Two or more of these solvents can be mixed. When two or more solvents are mixed, it is preferable to use a mixed solvent containing cyclic carbonates and chain carbonates. Examples of the cyclic carbonates include ethylene carbonate (EC), propylene carbonate (PC), and butylene carbonate (BC). Examples of the chain carbonates include dimethyl carbonate (DMC), ethyl methyl carbonate (EMC), and diethyl carbonate (DEC). Carbonate esters, such as methyl acetate (MA) and methyl propionate (MP), are preferably used as esters. Non-aqueous solvents may contain halogen substitutes in which at least some of the hydrogen atoms of these solvents are replaced with halogen atoms such as fluorine. For example, fluoroethylene carbonate (FEC) and methyl fluoropropionate (FMP) are preferrable as halogen substituents.

LiPF₆, LiBF₄, LiCF₃SO₃, lithium bis(fluorosulfonyl)imide, lithium bis(trifluoromethanesulfonyl)imide, and mixtures thereof can be used as electrolyte salts for nonaqueous electrolytes. The amount of electrolyte salt dissolved in a non-aqueous solvent is, for example, 0.5 mol/L to 2.0 mol/L. In addition, vinylene carbonate (VC) and propane sultone additives may be added.

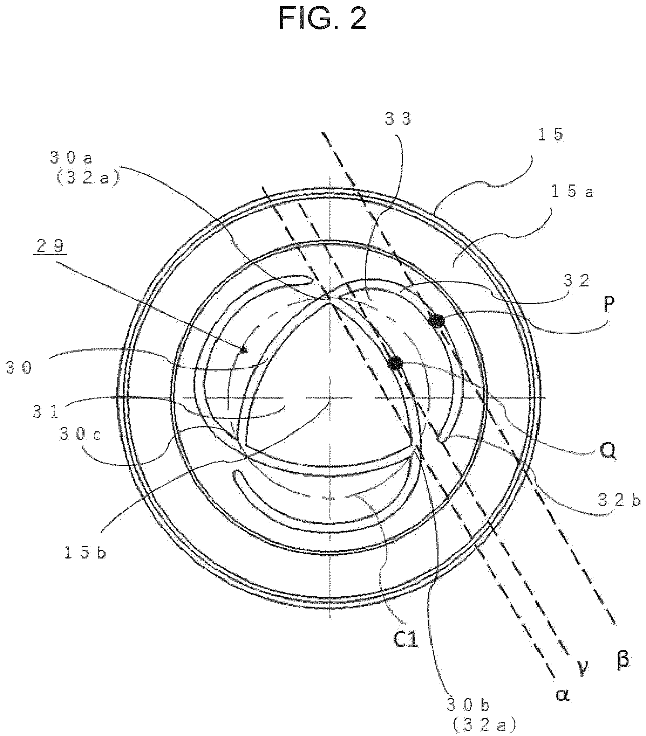

Exhaust valve 29 according to the present embodiment will be described below with reference to FIG. 2.

FIG. 2 is a bottom view of bottom part 15a of outer covering can 15 used in battery 10 according to the present embodiment.

As illustrated in FIG. 2, bottom part 15a of outer covering can 15 includes exhaust valve 29. Exhaust valve 29 includes: a plurality of curved first grooves 30; first valve part 31 enclosed by a loop-shaped groove formed by the plurality of first grooves 30 intersecting with one another in bottom part 15a; at least one curved second groove 32 that extends outward from first valve part 31; and second valve part 33 surrounded by first groove 30 and second groove 32. In battery 10, three first grooves 30 and this first valve part 31 have intersection points 30a, 30b, 30c where adjacent ones of first grooves 30 intersect with each other.

First valve part 31 is positioned so that the center of first valve part 31 coincides with the center of bottom part 15a. Each of first grooves 30 is a curved line arched to project toward outside first valve part 31. By having first grooves 30 in such a curved shape, the angle of the internal angle between the two adjacent first grooves and each of intersection points 30a, 30b, 30c can be increased compared to a first valve part including first grooves that are made of straight lines. This increases the stress on first grooves 30 at intersection points 30a, 30b, 30c, and facilitates the first valve opening by first valve part 31.

The curved line of first groove 30 may be, for example, a curved line along an arc which is on the circumference of an imaginary circle that has a center at one intersection point and passes through the remaining two intersection points, and which is positioned between the remaining two intersection points.

In addition, first valve part 31 includes three intersection points 30a, 30b, and 30c. With this configuration, when one of three intersection points 30a, 30b, 30c becomes a rupturing intersection point, two first grooves 30 connected to the rupturing intersection point rupture and then one first groove 30 is left unruptured. This facilitates the separation of first valve part 31 because after the first two first grooves are ruptured, there are fewer first grooves that need to be ruptured.

First grooves 30 are identical to one another in shape and length. Such dimension and shape allow the force by the gas to be applied more evenly to first grooves 30. Intersection points 30a, 30b, and 30c may be positioned on the same circumference C1. As illustrated in FIG. 2, joint part 15b that is joined to negative electrode lead 20 at bottom part 15a may be provided at the center of first valve part 31.

Battery 10 includes three second grooves 32. Respective second grooves 32 include first ends 32a connected to intersection points 30a, 30b, and 30c, and second ends 32b positioned away from first valve part 31. Each second end 32b serves as a connection part with bottom part 15a in second valve part 33. Each second groove 32 extends and protrudes toward the outside of first valve part 31 to be a curved line that is arched. Among three second grooves 32, second groove 32 connected to intersection point 30a and first groove 30 that is positioned between intersection point 30a and intersection point 30b form second valve part 33, second groove 32 connected to intersection point 30b and first groove 30 that is positioned between intersection point 30b and intersection point 30c form second valve part 33, and second groove 32 connected to intersection point 30c and first groove 30 that is positioned between intersection point 30c and intersection point 30a form second valve part 33.

The details of second groove 32 will be described below, with reference to second groove 32 connected to intersection point 30a in FIG. 2. The description below is applicable to second grooves 32 connected to the other intersection points.

When the straight line connecting intersection point 30a and intersection point 30b is defined as straight line α, and the farthest point in second groove 32 from straight line α is defined as point P, point P is positioned closer to intersection point 30a in second groove 32 than to intersection point 30b. With point P positioned in such a position, the distance to second end 32b, which is the connection part with bottom part 15a in second valve part 33, can be increased easily. Here, a part of second valve part 33 including point P is the region that can be easily made a largest pressure-receiving area. By the region including point P being away from second end 32b, the part of second valve part 33 that receives the greatest force from the gas being away from the connection part compared to a second valve part positioned closer to the second end side. Therefore, it becomes easy to apply force to second groove 32 and the connection part with the connection part as the fulcrum and the part that receives the greatest force from the gas as the point of effort. This configuration facilitates the second valve opening. It can also be said that, as illustrated in FIG. 2, point P is the point that touches straight line β parallel to straight line α in second groove 32.

Furthermore, when the point farthest from straight line α in first groove 30 that is positioned between intersection point 30a and intersection point 30b is defined as point Q, it is easy to further increase the area of the pressure receiving part including point P in second valve part 33 by being closer to intersection point 30a than point Q in the direction in which straight line α extends.

In addition, second end 32b is positioned closer to straight line α than to point P in the direction perpendicular to straight line α. This allows the width of the connection part between second valve part 33 and bottom part 15a to be reduced easily. This makes it easy to separate second valve part 33 from bottom part 15a.

Second end 32b is positioned closer to intersection point 30b than to intersection point 30a in the direction in which straight line α extends. This makes it easy to increase the pressure receiving area of second valve part 33 compared to a second valve part where second end 32b is positioned closer to intersection point 30a.

Moreover, second groove 32 connected to intersection point 30a and first groove 30 that is positioned between intersection point 30a and intersection point 30c form a continuous curve. This configuration allows second groove 32 to reduce the time lag between when the first valve opening starts and when the second valve opening starts. This configuration facilitates a smooth transition from the first valve opening to the second valve opening, allowing a more rapid increase of the exhaust port area of exhaust valve 29.

In exhaust valve 29, when the center of first valve part 31 coincides with the center of bottom part 15a, for example, for an outer covering can with an outer diameter of 46 mm, the diameter of an imaginary circle with the center of bottom part 15a as a center and passing through all intersection points may be 10 mm to 30 mm, for example.

When each second groove 32 includes an arc along the circumference of an imaginary circle with the center of bottom part 15a as a center, and the part of the second groove excluding the arc is positioned within the same imaginary circle, the diameter of the imaginary circle may be larger than the diameter of the imaginary circle passing through the intersection points described above, and be, for example, 20 mm to 40 mm.

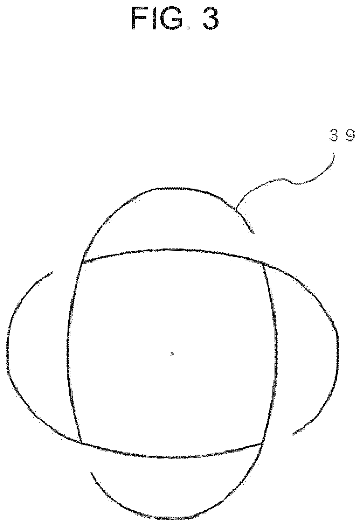

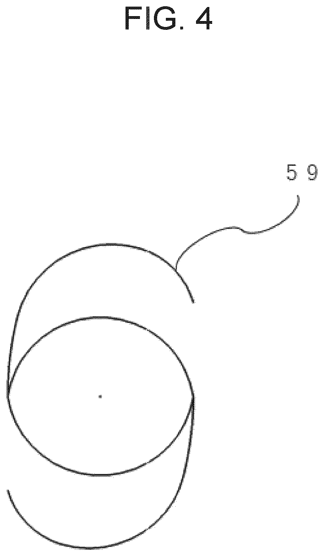

Variations of exhaust valve 29 used in battery 10 will be described based on FIG. 3 and FIG. 4.

FIG. 3 illustrates exhaust valve 39 in which the number of the first grooves is four, the number of the second grooves is four, and the number of the intersection points of the first valve part is four. FIG. 4 illustrates exhaust valve 59 in which the number of the first grooves is two, the number of the second grooves is two, and the number of the intersection points of the first valve part is two. As illustrated in FIG. 3 and FIG. 4, in a similar manner, both exhaust valve 39 and exhaust valve 59 are exhaust valves that allow the first valve part and the second valve part to be opened easily. This can lead to a higher reliability as exhaust valves.

The following is a description of the performance evaluations carried out using exhaust valve 29 according to the present embodiment.

### < Performance Evaluation Test >

A sample with the battery configuration illustrated in FIG. 1 excluding the electrode body, the upper insulating plate, the lower insulating plate, the positive electrode lead, and the negative electrode lead was prepared. The bottom part of the outer covering can includes the exhaust valve illustrated in FIG. 2. In the sample, for an outer covering can made of a nickel-plated steel sheet with an outer diameter of 46 mm, the diameter of an imaginary circle passing through three intersection points in the first valve part was 22 mm, the diameter of a curved part along the arc of an imaginary circle in the second groove of the exhaust valve was 28.5 mm, the thickness of the part of the bottom part of the outer covering can where the exhaust valve was not disposed was 0.7 mm, and the depth of the first and second grooves was 0.6 mm.

A hole was formed on the side peripheral surface of the outer covering can of this sample, a tube was inserted into the hole, and nitrogen gas was filled through the hole at a constant rate of 0.02 MPa/s using a pressure-application device. Subsequently, whether the exhaust valve was operated when the internal pressure of the sample reached 1.7 MPa was checked.

The result of the above test confirmed that the first valve opening and the second valve opening of the exhaust valve of the sample were performed when the internal pressure of the sample reached 1.7 MPa. In the sample, it was confirmed that rupturing from the points other than the exhaust valve was avoided. The first valve part was separated from the sample at the time of the first valve opening.

The above test has confirmed that the exhaust valve used in the power storage device according to the present disclosure have increased reliability.

### REFERENCE MARKS IN THE DRAWINGS

- 10: battery (power storage device)

- 11: positive electrode
- 12: negative electrode
- 13: separator
- 14: electrode body
- 15: outer covering can
- 15a: bottom part
- 15b: joint part
- 16: sealing body
- 17: upper insulating plate
- 18: lower insulating plate
- 19: positive electrode lead
- 20: negative electrode lead
- 21: groove
- 22: filter
- 23: lower valve body
- 24: insulating member
- 25: upper valve body
- 26: cap
- 26a: opening
- 27: gasket
- 29, 39, 59: exhaust valve
- 30: first groove
- 30a, 30b, 30c: intersection point
- 31: first valve part
- 32: second groove
- 32a: first end
- 32b: second end
- 33: second valve part

## Claims

1. A power storage device (10) comprising:
an electrode body (14) that includes a first electrode and a second electrode; and
an outer covering can (15) that houses the electrode body (14),
wherein the outer covering can (15) includes a bottom part (15a) that includes an exhaust valve (29, 39, 59) that opens when an internal pressure of the outer covering can (15) exceeds a predetermined value,
the exhaust valve (29, 39, 59) includes:
a plurality of first grooves (30) that are curved;
a first valve part (31) that is a region enclosed by a loop-shaped groove formed by the plurality of first grooves (30) intersecting with one another;
at least one second groove (32) that is curved and extends outward from the first valve part (31); and
a second valve part (33) that is adjacent to the first valve part (31), the second valve part (33) being surrounded partly by one of the plurality of first grooves (30) and the at least one second groove (32),
the plurality of first grooves (30) include a plurality of intersection points (30a, 30b, 30c) at which adjacent ones of the plurality of first grooves (30) intersect with each other,
the plurality of intersection points (30a, 30b, 30c) include a first intersection point and a second intersection point that is adjacent to the first intersection point,
the at least one second groove (32) includes a first end (32a) that is connected to the first intersection point and a second end (32b) that is positioned closer to the second intersection point than to the first end (32a), the second end (32b) being positioned away from the first valve part (31),
wherein,
when a straight line connecting the first intersection point and the second intersection point is defined as a straight line α, and a point farthest from the straight line α in the at least one second groove (32) is defined as a point P,
the point P is positioned closer to the first end (32a) than to the second end (32b), and
the second end (32b) is positioned closer to the straight line α than to the point P.

2. The power storage device (10) according to claim 1,
wherein, among two first grooves (30) included in the plurality of first grooves (30) and intersecting with each other at the first intersection point, one of the two first grooves (30) and the at least one second groove (32) constitute a continuous curved groove.

3. The power storage device (10) according to claim 1,
wherein the at least one second groove (32) comprises a plurality of second grooves (32), and
a total number of the plurality of intersection points (30a, 30b, 30c) is equal to a total number of the plurality of second grooves (32).

4. The power storage device (10) according to any one of claims 1 to 3,
wherein the plurality of first grooves (30) are identical to one another in shape and length,
the at least one second groove (32) comprises a plurality of second grooves (32), and
the plurality of second grooves (32) are identical to one another in shape and length.

## Patentansprüche

1. Energiespeichervorrichtung (10), mit:
einem Elektrodenkörper (14), der eine erste Elektrode und eine zweite Elektrode umfasst; und
einer Außengehäusebüchse (15), die den Elektrodenkörper (14) aufnimmt,
wobei die Außengehäusebüchse (15) einen Bodenabschnitt (15a) umfasst, der ein Auslassventil (29, 39, 59) umfasst, das sich öffnet, wenn ein Innendruck der Außengehäusebüchse (15) einen vorbestimmten Wert überschreitet,
wobei das Auslassventil (29, 39, 59) umfasst:
mehrere erste Rillen (30), die gekrümmt sind;
ein erstes Ventilteil (31), das ein Bereich ist, der von einer schleifenförmigen Rille umschlossen ist, die durch die mehreren ersten Rillen (30) gebildet wird, die einander schneiden;
mindestens eine zweite Rille (32), die gekrümmt ist und sich vom ersten Ventilteil (31) nach außen erstreckt; und
ein zweites Ventilteil (33), das zu dem ersten Ventilteil (31) benachbart ist, wobei das zweite Ventilteil (33) teilweise von einer der mehreren ersten Rillen (30) und der mindestens einen zweiten Rille (32) umgeben ist,
die mehreren ersten Rillen (30) mehrere Schnittpunkte (30a, 30b, 30c) aufweisen, an denen benachbarte der mehreren ersten Rillen (30) einander schneiden,
die mehreren Schnittpunkte (30a, 30b, 30c) einen ersten Schnittpunkt und einen zweiten Schnittpunkt umfassen, der zu dem ersten Schnittpunkt benachbart ist,
die mindestens eine zweite Rille (32) ein erstes Ende (32a), das mit dem ersten Schnittpunkt verbunden ist, und ein zweites Ende (32b) aufweist, das näher am zweiten Schnittpunkt als am ersten Ende (32a) positioniert ist, wobei das zweite Ende (32b) vom ersten Ventilteil (31) entfernt positioniert ist,
wobei,
wenn eine gerade Linie, die den ersten Schnittpunkt und den zweiten Schnittpunkt verbindet, als gerade Linie α definiert ist, und ein Punkt, der in der mindestens einen zweiten Rille (32) am weitesten von der geraden Linie α entfernt ist, als Punkt P definiert ist,
der Punkt P näher am ersten Ende (32a) als am zweiten Ende (32b) positioniert ist, und
das zweite Ende (32b) näher an der geraden Linie α als an dem Punkt P positioniert ist.

2. Energiespeichervorrichtung (10) nach Anspruch 1,
wobei unter zwei ersten Rillen (30), die in den mehreren ersten Rillen (30) enthalten sind und einander an dem ersten Schnittpunkt schneiden, eine der beiden ersten Rillen (30) und die mindestens eine zweite Rille (32) eine durchgehende gekrümmte Rille bilden.

3. Energiespeichervorrichtung (10) nach Anspruch 1,
wobei die mindestens eine zweite Rille (32) mehrere zweite Rillen (32) umfasst und
eine Gesamtzahl der mehreren Schnittpunkte (30a, 30b, 30c) gleich einer Gesamtzahl der mehreren zweiten Rillen (32) ist.

4. Energiespeichervorrichtung (10) nach einem der Ansprüche 1 bis 3,
wobei die mehreren ersten Rillen (30) in Form und Länge identisch sind,
die mindestens eine zweite Rille (32) mehrere zweite Rillen (32) umfasst und
die mehreren zweiten Rillen (32) in Form und Länge identisch sind.

## Revendications

1. Dispositif de stockage d'énergie (1) comprenant :
un corps d'électrode (14) qui comprend une première électrode et une deuxième électrode ; et
une boîte de boîtier extérieur (15) qui loge le corps d'électrode (14),
dans lequel la boîte de boîtier extérieur (15) comprend une partie de fond (15a) qui comprend une soupape d'échappement (29, 39, 59) laquelle s'ouvre lorsqu'une pression interne de la boîte de boîtier extérieur (15) dépasse une valeur prédéterminée,
la soupape d'échappement (29, 39, 59) comprenant :
une pluralité de premières rainures (30) qui sont incurvées ;
une première partie de soupape (31) qui est une région entourée par une rainure en forme de boucle formée par la pluralité de premières rainures (30) qui se croisent l'une l'autre ;
au moins une deuxième rainure (32) qui est incurvée et s'étend vers l'extérieur à partir de la première partie de soupape (31), et
une deuxième partie de soupape (33) qui est adjacente à la première partie de soupape (31), la deuxième partie de soupape (33) étant entourée en partie par l'une de la pluralité de premières rainures (30) et par ladite au moins une deuxième rainure (32),
la pluralité de premières rainures (30) comprend une pluralité de points d'intersection (30a, 30b, 30c) où des rainures adjacentes de la pluralité de premières rainures (30) se croisent l'une l'autre,
la pluralité de points d'intersection (30a, 30b, 30c) comprend un premier point d'intersection et un deuxième point d'intersection qui est adjacent au premier point d'intersection,
ladite au moins une deuxième rainure (32) comprend une première extrémité (32a) qui est reliée au premier point d'intersection et une deuxième extrémité (32b) qui est située plus près du deuxième point d'intersection que de la première extrémité (32a), la deuxième extrémité (32b) étant éloignée de la première partie de soupape (31),
dans lequel
lorsqu'une ligne droite reliant le premier point d'intersection au deuxième point d'intersection est définie comme une ligne droite α, et un point le plus éloigné de la ligne droite α dans ladite au moins une deuxième rainure (32) est défini comme un point P,
le point P est positionné plus près de la première extrémité (32a) que de la deuxième extrémité (32b), et
la deuxième extrémité (32b) est positionnée plus près de la ligne droite α que du point P.

2. Dispositif de stockage d'énergie (10) selon la revendication 1,
dans lequel, parmi deux premières rainures (30) incluses dans la pluralité de premières rainures (30) et se croisant au premier point d'intersection, l'une des deux premières rainures (30) et ladite au moins une deuxième rainure (32) constituent une rainure incurvée continue.

3. Dispositif de stockage d'énergie (10) selon la revendication 1,
dans lequel ladite au moins une deuxième rainure (32) comprend une pluralité de deuxièmes rainures (32), et
un nombre total de la pluralité de points d'intersection (30a, 30b, 30c) est égal à un nombre total de la pluralité de deuxièmes rainures (32).

4. Dispositif de stockage d'énergie (10) selon l'une quelconque des revendications 1 à 3,
dans lequel les plusieurs premières rainures (30) sont identiques entre elles en forme et en longueur,
ladite au moins une deuxième rainure (32) comprend une pluralité de deuxièmes rainures (32), et
les plusieurs deuxièmes rainures (32) sont identiques entre elles en forme et en longueur.
